# NEUE EUROPÄISCHE PATENTSCHRIFT

(11) **EP 0 732 533 B2**
(45) Veröffentlichungstag und Bekanntmachung des Hinweises auf die Entscheidung über den Einspruch: **21.05.2003**
(45) Hinweis auf die Patenterteilung: 11.08.1999
(21) Anmeldenummer: 96103230.7
(22) Anmeldetag: 02.03.1996
(51) Int. Cl.: F16L 58/10

(54) **Leitungsrohr mit einer wärme- und/oder schallisolierenden Hülle**
Conduit having a thermally and/or acoustically insulating sleeve
Conduite ayant un manchon isolant thermiquement et/ou acoustiquement

(30) Priorität: 16.03.1995 DE 19509585
(43) Veröffentlichungstag der Anmeldung: 18.09.1996
(73) Patentinhaber: KM Europa Metal Aktiengesellschaft, D-49023 Osnabrück (DE)
(72) Erfinder: Reiter, Ulrich, Dr., 49080 Osnabrück (DE); Klein, Gerhard, 49074 Osnabrück (DE)

(56) Entgegenhaltungen:
- EP-A- 0 364 717
- DE-A- 2 310 898
- DE-A- 2 905 011
- DE-A- 3 409 013
- GB-A- 2 097 416
- JP-A- 6 080 849
- JP-U- 1 067 342
- US-A- 4 345 363
- US-A- 4 464 502
- PATENT ABSTRACTS OF JAPAN vol. 10, no. 85 (C-336), 4.April 1986 & JP-A-60 219249 (FUJIKURA DENSEN KK)
- PATENT ABSTRACTS OF JAPAN vol. 7, no. 118 (C-167), 21.Mai 1983 & JP-A-58 037039 (DAINICHI NIPPON DENSEN )

## Beschreibung

Die Erfindung betrifft ein Installationsrohr aus Kupfer, das mit einer aufextrudierten wärmeund schallisolierenden Hülle aus einer auf der Basis von Polyvinylchlorid und Füllstoffen bestehenden Kunststoffmischung versehen ist.

Es ist seit langem bekannt, Leitungsrohre für Warm- und Kaltwasser sowie andere Strömungsmedien, deren Temperaturen von den jeweiligen Umgebungstemperaturen abweichen, mit einer wärmeisolierenden Hülle zu versehen.

Für die werksseitige Ummantelung von metallischen Leitungssystemen für die gesamte Hausinstaliation werden überwiegend Kunststoffmischungen auf der Basis von Polyvinylchlorid (Weich-PVC) eingesetzt. Die in der Regel auf die Metallrohre extrudierten Kunststoffmäntel weisen zur Erhöhung der Dämmwirkung nach innen ragende Rippen auf, welche die Kunststoffmäntel gegen die Oberflächen der zu isolierenden Metallrohre abstützen. Derartige Leitungsrohre sind beispielsweise aus der DE 23 10 898 A1 bekannt. In den Mischungen der Kunststoffmäntel sind bleihaltige Stabilisatoren enthalten.

Der Werkstoff Polyvinylchlorid ist in den letzten Jahren wiederholt wegen seiner unter bestimmten Voraussetzungen gesundheits- und umweltschädlichen Wirkung angegriffen worden. Ein Angriffspunkt ist die Verwendung der bleihaltigen Stabilisatoren, die üblicherweise Bestandteil von Kunststoffmischungen auf der Basis von Polyvinylchlorid sind, wenn es auf eine hohe thermische Beständigkeit ankommt. Bei thermischer Belastung, beispielsweise während der Verarbeitung (Extrusion), oder bei hohen Betriebstemperaturen spaltet Polyvinylchlorid Chlorwasserstoff ab. In Anwesenheit von Luftsauerstoff findet darüber hinaus eine Autoxidation statt.

Bislang sorgt der bleihaltige Stabilisator im Polyvinylchlorid dafür, daß der umweltschädliche Chlorwasserstoff gebunden und eine Autoxidation verhindert wird.

Im Umfang des Aufsatzes "Practicle Aspects of Polymere Stabilisation" in der Zeitschrift "British Polymere Journal" Volume 16, December 1984, Seiten 284 bis Seite 290 werden zwar Betrachtungen im Hinblick auf den Ersatz bleihaltiger Stabilisatoren durch bleifreie Stabilisatoren angestellt, wobei die Anwendung von Kaizium/Zink-Stabiiisatoren aber nur für Folienverpackungen für Lebensmittel angedacht wird. Ein internes Mengenverhältnis Kalzium zu Zink wird nicht erwähnt.

Auch die CN 1067062 offenbart nur ganz allgemein für PVC-Mischungen einen Kalzium/Zink-Stabiiisator. Welche Menge Kalzium im Verhältnis zu Zink eingesetzt werden soll, ist diesem Dokument jedoch nicht zu entnehmen.

Ausgehend vom Stand der Technik liegt der Erfindung die Aufgabe zugrunde, eine umweltfreundliche Kunststoffmischung für die Hülle wärme- und schallisolierter Installationsrohre aus Kupfer zur Verfügung zu stellen, die keine Schwermetalle, wie z.B. blei- oder cadmiumhaltige Zusätze enthält, und deren Temperaturstabilität nicht oder nur unwesentlich verringert ist.

Diese Aufgabe wird erfindungsgemäß durch die Kombination der im kennzeichnenden Teil des Patentanspruchs 1 aufgeführten Merkmale gelöst.

Vorteilhafte Weiterbildungen der Erfindung ergeben sich aus den Unteransprüchen.

Kern der Erfindung ist ein Installationsrohr aus Kupfer mit einer wärme- und schallisolierenden Hülle aus einer hochtemperaturbeständigen Kunststoffmischung auf der Basis von Polyvinylchlorid, die frei ist von schwermetallhaltigen Stabilisatoren. Wie in überraschender Weise festgestellt wurde, weist die erfindungsgemäße Kunststoffmischung, insbesondere aufgrund synergistischer Wirkungen bei Anwesenheit einer organischen kalzium- und zinkhaltigen Verbindung (z.B. Kalzium- und Zinkstearat), die ein im Bereich von 3: 1 bis 30:1, vorzugsweise im Bereich von 15:1 bis 25:1 liegendes Verhältnis von Kalzium zu Zink aufweist, die nahezu gleiche thermische Stabilität nach künstlicher Alterung auf, wie die bisherigen bleisulfathaltigen Kunststoffmischungen. Die thermische Stabilität wurde dabei nach einem Testverfahren gemäß DIN 57 472 Teil 614 ermittelt.

Die Erfindung wird nachfolgend anhand einiger Ausführungsbeispiele näher erläutert.

In einem Mischer werden die in der nachstehend aufgeführten Tabelle angegebenen Bestandteile der Kunststoffmischung miteinander gemischt und in Form einer durchfeuchteten Masse in einen Extruder eingegeben und dort bei 180°C plastifiziert. Am Ende des Schneckengangs des Extruders wird die plastifizierte Masse gegen eine Lochplatte gepreßt und mittels an sich bekannter Schneidvorrichtungen granuliert. Das auf diese Weise gebildete Granulat wird abgekühlt und in den Trichter eines Extruders gefüllt und mittels eines Querspritzkopfes auf ein kontinuierlich durchlaufendes weichgeglühtes Kupferrohr aufextrudiert. Die Extrusionsgeschwindigkeit beträgt dabei 100 m/min.

Wie die in der Tabelle zusammengefaßten Vergleichsversuche zeigen, kann bei Zusatz eines bleifreien Stabilisators auf der Basis einer kalzium- und zinkhaltigen Verbindung mit einem Verhältnis von Kalzium zu Zink von 20:1 (Beispiele 2 und 3) nahezu die gleiche thermische Stabilität der Kunststoffmischung erreicht werden, wie mit einem dreibasischen Bleisulfat (Beispiel 1).

**Tabelle**

| Bestandteile in Gew.% | Beispiele | | |
|---|---|---|---|
| Polyvinylchlorid | 1 41 | 2 41,2 | 3 41 |
| Füllstoff | 32 | 32 | 32 |
| Weichmacher | 23,5 | 24 | 23 |
| Bleisulfat | 1,7 | - | - |
| Ca/Zn | - | 2 | 2,2 |
| Epoxi-Weichmacher | - | - | 1 |
| Antimontrioxid | 0,8 | 0,8 | 0,8 |
| Gleitmittel | 1 | - | - |
| Therm. Stabilität bei 200°C in min. | 165 | 146 | 168 |
| | | | |

## Patentansprüche

1. Installationsrohr aus Kupfer, das mit einer aufextrudierten wärme- und schallisolierenden Hülle aus einer auf der Basis von Polyvinylchlorid und Füllstoffen bestehenden Kunststoffmischung versehen ist, **dadurch gekennzeichnet, daß** die schwermetallfreie Kunststoffmischung aus folgenden Bestandteilen zusammengesetzt ist:
- 20 bis 40 Gew.% Kreide
- 20 bis 30 Gew.% langkettig verzweigte Phthalsäureester
- 1 bis 3 Gew.% eines Stabilisators aus einer organischen kalzium- und zinkhaltigen Verbindung, die ein im Bereich von 3:1 bis 30:1 liegendes Verhältnis von Kalzium zu Zink aufweist
- Rest Polyvinylchlorid in einem Anteil von wenigstens 35 Gew.%.

2. Installationsrohr nach Patentanspruch 1, **dadurch gekennzeichnet, daß** das Verhältnis von Kalzium zu Zink 15:1 bis 25:1 beträgt.

3. Installationsrohr nach Patentanspruch 1 oder 2, **dadurch gekennzeichnet, daß** die Kunststoffmischung zusätzlich bis zu 5 Gew.% eines co-stabilisierenden Zusatzes enthält.

4. Installationsrohr nach Patentanspruch 3, **dadurch gekennzeichnet, daß** als costabilisierender Zusatz epoxiertes Sojabohnenöl und/oder Antimontrioxid verwendet ist.

5. Installationsrohr nach einem der Patentansprüche 1 bis 4, **dadurch gekennzeichnet, daß** der Kunststoffmischung noch bis zu 1,5 Gew.% Gleitwachs und/oder Metallseife zugesetzt ist.

6. Installationsrohr nach einem der Patentansprüche 1 bis 5, **dadurch gekennzeichnet, daß** die Kunststoffmischung noch bis zu 0,5 Gew.% eines Zusatzes zur Verbesserung der Alterungsbeständigkeit enthält.

7. Installationsrohr nach Patentanspruch 6, **dadurch gekennzeichnet, daß** zur Verbesserung der Alterungsbeständigkeit organische Phosphate und/oder Phenole verwendet werden.

## Claims

1. Installation pipe made of copper, which is provided with an external heat and/or sound insulating sheath made of a plastic mixture based on polyvinyl chloride and fillers, **characterised in that** the heavy metal-free plastic mixture is composed of the following components:
- 20 to 40% by weight of chalk
- 20 to 30% by weight of long chain branched phthalic acid esters
- 1 to 3% by weight of a stabiliser composed of an organic compound which contains calcium and zinc and exhibits a ratio of calcium to zinc in the range from 3 : 1 to 30 : 1
- remainder polyvinyl chloride in a proportion of at least 35% by weight.

2. Installation pipe according to patent claim 1, **characterised in that** the ratio of calcium to zinc is 15 : 1 to 25 : 1.

3. Installation pipe according to patent claim 1 or 2, **characterised in that** the plastic mixture additionally contains up to 5% by weight of a co-stabilising additive.

4. Installation pipe according to claim 3, **characterised in that** epoxydised soya bean oil and/or antimony trioxide is used as co-stabilising additive.

5. Installation pipe according to one of claims 1 to 4, **characterised in that** up to 1.5% by weight of lubricating wax and/or metal soap is added to the plastic mixture.

6. Installation pipe according to one of claims 1 to 5, **characterised in that** the plastic mixture also contains up to 0.5% by weight of an additive for improving the resistance to ageing.

7. Installation pipe according to claim 6, **characterised in that** organic phosphates and/or phenols are used to improve the resistance to ageing.

## Revendications

1. Tube d'installation en cuivre muni d'une gaine extrudée sur le tube, faite d'un mélange de matière plastique à base de polychlorure de vinyle et de charges,
**caractérisé en ce que**
le mélange de matière plastique exempt de métaux lourds est composé des constituants suivants :
- 20 à 40 % en poids de craie
- 20 à 30 % en poids d'ester d'acide phtalique ramifié à longue chaîne
- 1 à 3 % en poids d'un stabilisant fait d'un composé organique contenant du calcium et du zinc, qui présente un rapport entre calcium et zinc situé dans l'intervalle de 3 : 1 à 30 : 1,
- le reste étant du polychlorure de vinyle, dans une proportion d'au moins 35 % en poids.

2. Tube d'installation selon la revendication 1,
**caractérisé en ce que**
le rapport entre calcium et zinc est de 15 : 1 à 25 : 1.

3. Tube d'installation selon la revendication 1 ou 2,
**caractérisé en ce que**
le mélange de matière plastique contient en supplément jusqu'à 5 % en poids d'un additif co-stabilisant.

4. Tube d'installation selon la revendication 3,
**caractérisé en ce que**
on utilise comme additif co-stabilisant de l'huile de grainé de soja époxydée et/ou du trioxyde d'antimoine.

5. Tube d'installation selon une des revendications 1 à 4,
**caractérisé en ce que**
on ajoute encore au mélange de matière plastique jusqu'à 1,5 % en poids d'une cire lubrifiante et/ou d'un savon métallique.

6. Tube d'installation selon une des revendications 1 à 5,
**caractérisé en ce que**
le mélange de matière plastique contient encore jusqu'à 0,5 % en poids d'un additif servant à améliorer la résistance au vieillissement.

7. Tube d'installation selon la revendication 6,
**caractérisé en ce que**
pour améliorer la résistance au vieillissement, on utilise des phosphates organiques et/ou des phénols.
